(19) Europäisches Patentamt
European Patent Office
Office européen des brevets

(11) Publication number: **0 258 089**
**B1**

(12) # EUROPEAN PATENT SPECIFICATION

(45) Date of publication of patent specification: **24.10.90**

(51) Int. Cl.$^5$: **C 08 F 10/00,** C 08 F 4/60

(21) Application number: **87401713.0**

(22) Date of filing: **23.07.87**

(54) **Process for preparing solid components of catalysts, or precursors of such components, in the form of microspheroidal particles, suitable for the preparation of ethylene polymers.**

(30) Priority: **31.07.86 IT 2133386**
**27.11.86 IT 2246986**

(43) Date of publication of application:
**02.03.88 Bulletin 88/09**

(45) Publication of the grant of the patent:
**24.10.90 Bulletin 90/43**

(84) Designated Contracting States:
**BE DE FR GB NL**

(56) References cited:
**EP-A- 255 790**
**EP-A-0 083 074**
**FR-A-2 434 180**
**US-A-3 953 414**

**The file contains technical information submitted after the application was filed and not included in this specification**

(73) Proprietor: **Montedison S.p.A.**
**31, Foro Buonaparte**
**I-20121 Milan (IT)**

(72) Inventor: **Albizzati, Enrico**
**64, via Roma**
**I-28041 Arona Novara (IT)**

(74) Representative: **Hirsch, Marc-Roger**
**Cabinet Hirsch 34 rue de Bassano**
**F-75008 Paris (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 258 089 B1**

Courier Press, Leamington Spa, England.

**Description**

The present invention relates to emulsions in perfluoropolyether oil of compounds liquid under emulsifying conditions, of magnesium and/or of a transition metal, or of solutions of compounds of Mg and/or of a transition metal in solvents not missible with perfluoropolyether. It also concerns a process for the preparation of a solid catalytic component of polymerisation catalysts or of precursors of such component suitable for use in the polymerisation of ethylene or of mixture thereof with minor amounts of alpha-olefins, in the form of microspheroidal particles. In particular, the invention relates to the preparation of solid catalytic components, comprising compounds of magnesium and of titanium, and optionally electro-donor compounds, to be used in the polymerization of ethylene or in the copolymerization of ethylene with minor amounts of one or more alpha-olefins.

Several processes for the preparation of solid catalytic components, suitable for the polymerization of ethylene, and of its mixtures with alpha-olefins are known from the prior art; said catalytic components comprise, as essential constituants, halogenated compounds of magnesium, titanium, and an electron-donor compound. The polymers obtained by use of such catalysts are generally in the form of a powder, with a more or less wide distribution of particle dimensions.

The use of such catalysts is, however, limited from the view point of the separation and of the carriage of the polymers, of the conditions of suspension polymerization, of the conditions of stabilization, and of the conditions of recovery of the polymer in the gas-phase polymerization processes.

There is thus a need for producing available catalysts presenting a high activity, which allow polymers to be obtained in the form of particles having a narrow granulometric distribution, and furthermore presenting a high bulk density.

Various methods have been proposed in the prior art for preparing such catalysts. One of them is disclosed, e.g., in Italian patent 969 340 in the name of the present Applicant, and consists in reacting a compound of Ti with a support consisting of, or comprising, an anhydrous Mg halide, in the form of spherical particles having an average diameter of 1—300 micrometers (microns), high surface area and optionally also with an electron-donor compound. A solid catalytic component is thus obtained which, when used with A1-organometallic compounds, produces s polymers in the form of particles having a narrow granulometric distribution, and presenting high free-flowing properties. However, in that case the technology to be used is rather complex.

Another method is disclosed in European patent application n° 83074 also filed in the name of present Applicant, and consists in preparing an emulsion, in a hydrocarbon or in a silicon oil, of an immiscible liquid comprising a complex of $MgCl_2$ with $AlCl_3$ and with toluene and in reacting such an emulsion with Al-trialkyl, to precipitate a solid catalytic component. The catalysts obtained from such catalytic components allow the obtention of polymers in the form of particles presenting a narrow granulometric distribution, the bulk density of which is, however, still not satisfactory.

The emulsions of the present invention are suited for the preparation of solid catalytic components in the form of solid catalytic components in the form of microspheroidal particles which do not suffer from the above mentioned drawbacks, and consist of emulsions in a perfluoropolyether oil of compounds either liquid or in a solution in a solvent not miscible with such perfluoropolyether, of magnesium and/or transition metal.

The process according to the present invention for the preparation of a solid catalytic component, of polymerization catalysts, or of precursors of such components suitable for use in the polymerization, of ethylene or of mixtures thereof with minor amounts of alpha-olefins, or of precursors of such catalytic components, in the form of microspheroidal particles, which consists in reacting (a) an emulsion in a perfluoropolyether of compounds of Mg and/or of Ti, or of another transition metal, either liquid of in solution in a solvent not miscible with the perfluoropolyether, optionally in the presence of electro-donors, with (b) a reducing and/or halogenating agent able of precipitating such a compound in the form of a solid product; the molecule of which contains at least one Mg-halogen bond and/or one transition metal-halogen bond, in case where compounds of Mg and/or of a transition metal are present in the emulsion.

By the term "precursors of the solid components of the catalyst", are meant herein those Mg compounds, which contain in their molecule at least one Mg-halogen bond, and preferably one Mg-chlorine bond.

The Mg compounds to be suitably used in the perfluoropolyether emulsion according to the process of the invention, are any magnesium compounds, which are liquid at the emulsifying temperature or which are soluble in a solvent not miscible with the perfluoropolyether, and which are able to produce, by reaction with the precipitating agent b), compounds the molecule of which contains at least one Mg-halogen bond. The titanium compounds, or compounds of other transition metals to be used according to the invention are tetrahalides, alkoxides or halo-alkoxides of tetravalent titanium; $VOCl_3$ or vanadium acetylacetonates are preferably used.

To that class of compounds belong among others those compounds which have the general formula:

(I) $Mg(OR_1)_{2-n}X_n$ wherein:

$R_1$ = optionally halogenated $C_1$ to $C_{12}$ hydrocarbon radical;

X is a halogen, preferably chlorine;

n = an integer comprised between 0 and 2, the extremes being included.

Examples of representative compounds of such formula are: $MgCl_2$, $MgBr_2$, $MgI_2$, $Mg(OC_2H_5)Cl$, $Mg(OC_6H_5)Cl$, $Mg(OC_8H_{17})Cl$, $Mg(OCH_2C_6H_5)Cl$, $Mg(OC_3H_6Cl)Cl$, $Mg(OC_3H_5Cl_2)Cl$, Mg(O-cyclohexyl)Cl, and the mixtures of such compounds; or

(II) $Mg(OR_1)_{m-n}(R_2)_n$ wherein:
$R_1$ has the above meaning;
$R_2$ can be a $C_1$ to $C_{12}$ hydrocarbon radical, similar to or different from $R_1$;
m and n are integers comprised between 0 and 2, with the extremes being included; or

(III) $MgX_2.nTi(OR_1)_4$ wherein:
X = halogen, preferably chlorine;
$R_1$ has the meaning given in formula (I);
n = integer greater than or equal to 2, but preferably not higher than 3.

(IV) Complexes of $MgX_2$ (wherein X has the above meaning) with electron-donor compounds.

As mentioned herein-above, the compounds of magnesium, titanium and other transition metals can be used for the preparation of their emulsion in perfluoropolyether, in the form of solution in one or more solvents. Such solvents should not be miscible with the perfluoropolyether used. Preferred solvents, in the case of magnesium compounds, are liquid titanium compounds in particular the Ti-alkoxides or halo-alkoxides of general formula:

(V) $Ti(OR_1)_{4-n}X_n$ wherein:
$R_1$ has the meaning given in above formula (I), and is, in particular, an alkyl, aryl, aralkyl or cycloalkyl radical, optionally containing up to 3 substituent halogen atoms;
X is a halogen, preferably chlorine;
n is an integer comprised between 0 and 3, with the extremes being included.

Examples of such Ti compounds are $Ti(O\text{-}iC_3H_7)_4$, $Ti(O\text{-}nC_4H_9)_4$, $Ti(O\text{-}iC_4H_9)_4$, $Ti(O\text{-}iC_8H_{17})_4$, $Ti(O\text{-}CH_2C_6H_5)_4$, $Ti(O\text{-}C_3H_6Cl)_4$, $Ti(O\text{-}C_3H_5Cl_2)_4$, $Ti(O\text{-}C_4H_9)_3Cl$, $Ti(O\text{-}C_4H_9)_2Cl_2$.

Polymers of the compounds of general formula (V), with a polymerization degree of from 2 to 20, can also be used. Mixtures of the above-mentioned solvents with organic solvents, e.g., hydrocarbon solvents, can be used.

When the liquid Mg compound can react with the precipitating agent, so that it precipitates from the emulsion in the form of a solid compound the molecule of which contains at least one Mg-halogen bond, the presence of liquid Ti compounds in the emulsion is optional. When the Mg compound cannot react with the precipitating agent, it is suitable to use in the emulsion a liquid Ti compound, able to bind itself to the Mg compound, and to react, in its turn, with the precipitating agent, yielding a solid product the molecule of which contains at least one Mg-halogen and Ti-halogen bond. In this second case, the Ti compound can also act as a solvent for the Mg compound. For example, in case where as Mg compound is used a dihalide, satisfactory results are obtained by using in the emulsion a Ti-alkoxide, which forms a liquid complex with the Mg halide, capable of reacting with the precipitating agent. Such a Ti-alkoxide can be one of those comprised in the above disclosed general formula (V).

The perfluoropolyethers herein used for preparing the emulsions are well-known products, wherein the perfluoropolyether structure is generally formed of recurring $C_2F_4O$— and/or $C_3F_6O$— units, optionally also comprises —$CF_2O$— units, as disclosed, e.g., in the patents to which reference is made hereinunder.

Examples of suitable perfluoropolyethers are in particular those which conform to the following formulae, and have a viscosity comprised between 4 and 1500 $mm^2/s$ (cSt):

A) $CF_3O—(C_3F_6O)_m(C_2F_4O)_n(CFXO)_q—CF_3$
wherein X is —F or —$CF_3$; m, n and q are integers, the m/n + q ratio being comprised between 1 and 50 and n/q comprised between 1 and 10; the oxyperfluoroalkylene units are randomly distributed along the chain. The preparation of these compounds is disclosed in U.S. patent 3,665,041.

B) $C_3F_7O(C_3F_6O)_m—R_f$
wherein $R_f$ is $C_2F_5$ or $C_3F_7$ and m is an integer greater than 2.
The preparation of these compounds is disclosed in U.S. patent 3,242,218.

C) $CF_3O(C_2F_4O)_p(CF_2O)_q—CF_3$
wherein p and q are integers equal to, or different from each other, and the p/q ratio is comprised between 0.5 and 1.5; the oxyperfluoroalkylene units are randomly distributed along the chains.
The preparation of these compounds is disclosed in U.S. patents 3,715,378 and 3,665,041.

D) $CF_3O(C_3F_6O)_m(CFXO)_n—CF_2Y$
wherein X and Y, equal to or different from each other, are —F or —$CF_3$; m and n are integers and the m/n ratio varies between 5 and 40. The oxyperfluoroalkylene units are randomly distributed along the chain. The preparation of these compounds is disclosed in U.K. patents 1,104,481 and 1,226,566.

E) $R'_fO(CF_3CF_2O)_pR_f$
wherein $R_f$ and $R'_f$, equal to or different from each other, are —$CF_3$ or —$C_2F_5$ and p is an integer such that the viscosity is within the previously indicated limits. Products of this type are disclosed in U.S. patent 4,523,039.

F) $R'_fO(CF_2CF_2CF_2O)_sR_f$

wherein $R_f$ and $R'_f$, equal to or different from each other, are $—CF_3$ or $—C_2F_5$ and s is an integer such that the viscosity is within the previously indicated limits. Products of this type are disclosed in European patent application 148 482.

Usually, the perfluoropolyether used for forming the emulsion has a viscosity comprised between 4 and 200 $mm^2/s$ (cSt).

Although the process is normally carried out with the emulsion at room temperature, operating at a value lower or higher than room temperature, e.g. at a temperature from −30° to +90°C, is however possible.

The ratio, by volume, of the magnesium compound to the perfluoropolyether in the emulsion is comprised between 0.01 and 1.

The emulsion is preferably prepared in the presence of an emulsion stabilizer constituted by a perfluoropolyether having a functionalized terminal.

The perfluoropolyether having a functionalized terminal has preferably the following terminals:

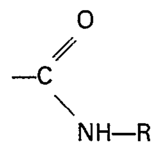

or

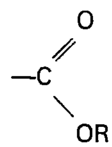

wherein:

R is a $C_1$ to $C_0$ linear, branched or cyclic alkyl, or a $C_7$ to $C_{20}$ alkylaryl; R may laso contain heteroatoms, in particular O and/or Si atoms, and substituents, e.g. Cl. Examples of suitable emulsions stabilizers are:

$$CF_3—(OC_3F_6)_n(OCF_2)_m—O—CF_2—COO—CH_2—CH—CH_3 \qquad (I)$$
$$CH_3$$

$$CF_3—(OC_3F_6)_n(OCF_2)_m—OCF_2—COO—CH_2—CHOH—O—(CH_2)_3—Si(OMe)_3 \qquad (II)$$

$$CF_3—(OC_3F_6)_n(OCF_2)_m—O—CF_2CO—NH—(CH_2)_3—Si(OEt)_3 \qquad (III)$$

The amount of emulsion stabilizer is generally comprised between 0.01% and 5% by weight relative to the perfluoropolyether; however any amounts allowing the emulsion to be obtained can be used in the process of the invention.

The emulsion can be prepared, e.g., by a strong stirring, e.g., by using an Ultraturrax stirrer.

Electron-donor compounds can be added to the emulsion of Mg compound, prior to the treatment thereof with the precipitating agent (b).

Particularly suitable electron-donors contain in their molecule oxygen atoms, or sulphur, phosphorus or nitrogen or silicon atoms.

In particular, the following can be cited: esters of oxygen-containing acids, acid halides, ketones, aldehydes, alcohols, ethers, thioethers, amides lactons, phosphines, phosphoroamides, silicon compounds, such as silanic and siloxanic compounds.

Among esters, for exemplifying purposes can be cited the following: the $C_1$ to $C_{20}$ alkyl esters of aromatic, aliphatic or aromatic mono- or polycarboxy acids, in particular the mono- and polyesters of the saturated and unsaturated polycarboxy acids, the esters of the aromatic hydroxyacids, and in general those disclosed, as electron-donors, in published European patent applications n° 45976, 45977, in the name of the present Applicant. Examples of such esters are methyl-, ethyl-, butyl- or octyl-acetate; ethyl- or ethylphenyl-butyrate, ethyl-valerianate, phenyl-propionate, mono- and di-ethylsuccinate, ethyl-methyl-, ethyl-, propyl- or octyl-benzoate, ethyl-p-toluate, ethyl-p-anisate, diethyl-diisobutyl-malonate, diethyl-n-butyl-malonate, diethyl-n-dibutyl-malonate, diethylphenyl-malonate, diisobutyl-adipate, dioctyl-sebacate, alkylmaleates, alkyl-aryl-maleates, alkyl- or aryl-alkyl-pivalates, alkyl-acrylates and metacrylates, phthalates, such as isobutyl-, diisobutyl-, dioctyl- or neopentyl-phthalate, diethyl-phthalate, diphenyl-phthalate, benzyl-butyl-phthalate; diphenylcarbonate, ethyldiphenylacetate, isobutyl-benzoylacetate, 1.2-dihydroxydiacetato-benzene, diisobutyl-2,3-naphthalene-dicarboxylate.

Among ethers, for exemplifying purposes can be cited the following: the $C_2$ to $C_{20}$ mono-, di-, tri- or tetra-ethers, such as diethylether, dibutylether, diisoamylether, dioctylether, dioxan, trioxan, tetrahydrofuran ethylenglycol-dimethylether, propylene oxide, epichlorohydrin, benzophenone.

Examples of other electron donors which can be used are phosphites, such as triphenylphosphite, triphenylphosphine, 1,4-butanediol; $POCl_2$, acetyl alpha-methyl-alpha-phenyl chloride, benzoyl, chloride, bromide and iodide, toluyl chloride, butyrolacton, and generally all those indicated in European patent applications n° 86471, 86742 and 86743 in the present Applicant's name. Furthermore, the silicon compounds and the heterocyclic compounds containing at least one nitrogen atom are indicated.

The precipitating agents (b) to be used for the treatment of the emulsion, can be any halogenated compounds capable of reacting with the compound of magnesium or of the transition metal contained in the emulsion to yield a solid compound the molecule of which contains at least one Mg-halogen bond, and/or at least one transition metal-halogen bond. In the case of emulsions containing Mg compounds, the compounds to be used are generally halogenating compounds capable of forming, in the reaction with Mg, halides, or organometallic compounds, in particular aluminum-trialkyls, able to decompose the liquid Mg complex, with the formation of Mg halide. In the case of transition metals, the precipitating agent is generally a organometal reducer.

Examples of halogenating compounds are the silicon compounds having the general formula:

$$SiR_xX_{4-x}$$

wherein:

R = $C_1$ to $C_{20}$ alkyl, aryl, aralkyl or alkoxy radical;

X = halogen, preferably chlorine; and

$0 \leq x \leq 3$;

or the titanium compounds of general formula:

$$Ti(OR)_xX_{4-x}$$

wherein R, X and x have the above meaning;

or the aluminum compounds, of formula:

$$AlR_xX_{3-x}$$

wherein R and X have the above meaning; and $0 \leq x \leq 2$.

For exemplifying purposes, among these compounds $SiCl_4$, $TiCl_4$, $AlEt_4Cl$ can be cited.

The treatment of the emulsion with the precipitating (or halogenating) agent is carried out by using an amount of said agent at least equal to the stoichiometrical amount necessary to obtain at least one Mg-halogen bond in the molecule of the magnesium compound present in the emulsion, and/or to obtain at least the reduction by one unit of the valence of the transistion metal, when a transistion metal compound is present.

The treatment temperature is not critical; for exemplifying purposes, operating is possible at temperatures comprised between 20°C and the boiling temperature of the precipitating agent. The treatment can be performed by adding the halogenating agent as such, or diluted in a hydrocarbon solvent, to the emulsion, or vice-versa.

After the reaction, the solid product is separated washed and then, if it was obtained in the form of a precursor (i.e., if it was obtained from the emulsion without Ti compounds, or without any compounds, of other transition metals, by using a precipitating agent different from a transition metal compound), it is treated with a tetravalent-Ti halide, or with a halide of a transition metal different from Ti, to obtain the catalytic component. If desired, operating in the presence of an electron donor is possible.

The treatment can also be carried out in the presence of an aromatic or halogenated hydrocarbon solvent. The size of the catalytic component of the precursor is controlled by the stirring speed, by the viscosity of the polyperfluoroether liquid and of the liquid, or solution of compound of Mg and/or of the transition metal. In particular, the size decreases with increasing stirring speed.

The following examples are supplied for the purpose of illustrating the present invention, without constituting a limitation thereof.

## Example 1

Into a 1000 ml autoclave equipped with a magnetic-anchor stirrer and a dip tube connected, through a valve, to a 4000 mm long steel pipe of 2.4 mm of inner diameter, are charged 300 ml of perfluoropolyether (Epilden DI/LS® by Montelfluos S.p.A.), having a viscosity of 4 $mm^2/s$ (cSt), 40 ml of a liquid having the composition $MgCl_2.2Ti(OC_4H_9)_4$ (equivalent to 60 mM of Mg), and 6 ml of anhydrous n-heptane. The mass is maintained under stirring at 400 rpm, for 10 minutes, after which an overpressure of 50 atm of $N_2$ is created. During a 60 second period, the emulsion contained in the autoclave is discharged, through the above-described pipe, into a 1000 ml flask, containing 400 ml of $TiCl_4$, maintained under stirring. The whole operation is carried out at 20°C. The reaction mass is maintained under stirring in the flask for 10 minutes, and the suspension is then transferred through a fritted filter into a reactor, wherein it is allowed to react at 100° for 2 hours. $TiCl_4$ is filtered off, and an equal amount thereof is added. The mixture is left to react at 120°C for 2 hours. The suspension is filtered and is washed with portions of 300 l of n-heptane at 90°C, until no further chlorine ions are present in the filtrate.

Upon analysis, the solid obtained shows a titanium content of 2.5%.

The ethylene polymerization test carried out by using 12 mg of the solid thus obtained as catalytic component gave the following results.

| | |
|---|---|
| polymer | 384 g |
| yield | 32.0 kg of polymer/catalyst g |
| [η] | 2.10 dl/g |
| flowability index (flow) | 21 seconds |
| compacted bulk density (C.B.D.) | 0.43 g/cm$^3$ (g/cc) |

Example 2

Into the autoclave as described in example 1, are charged 500 ml of perfluoropolyether and 200 ml of an 0.4 M solution of Mg(n-hexyl)$_2$ in heptane.

The mass is stirred and, according to the same procedure as described in example 1, the contents of the autoclave are discharged, through the pipe, into a flask containing 400 ml of $SiCl_4$, maintained understirring. The reaction is allowed to proceed for 10 minutes at 25°C and 2 hours at 60°C. The solid formed, after filtration and washing with n-heptane, is reacted with 100 ml of $TiCl_4$ at 185°C for 2 hours, after which it is isolated by filtration and washed with h-heptane until the chlorine ions disappear from the filtrate. Upon analysis, the solid obtained shows a titanium content of 1.2%.

The ethylene polymerization test carried out by using 18 mg of the solid thus obtained as the catalytic component gave the following results:

| | |
|---|---|
| polymer | 315 g |
| yield | 8.0 kg of polymer/catalyst g |
| [η] | 2.10 dl/g |
| flowability index | 19 seconds |
| compacted bulk density | 0.44 g/cm$^3$ (g/cc) |

Comparative Example 1

Example 1 is repeated without any use of perfluoropolyether and hence the emulsifying step is omitted. Upon analysis, the solid thus obtained shows a titanium content of 2.6%. The ethylene polymerization test carried out by using 13 mg of the solid thus obtained as the catalytic component gave the following results:

| | |
|---|---|
| polymer | 410 g |
| yield | 31.5 kg of polymer/catalyst g |
| [η] | 2.0 dl/g |
| flowability index | 26 seconds |
| compacted bulk density | 0.31 g/cm$^3$ (g/cc) |

Comparative Example 2

Example 2 is repeated without any use of perfluoropolyether and hence the emulsifying step is omitted. Upon analysis, the solid thus obtained shows a titanium content of 1.25%. The ethylene

polymerization test carried out by using 18 mg of the solid thus obtained as the catalytic component gave the following results:

| | |
|---|---|
| polymer | 290 g |
| yield | 18.1 kg of polymer/catalyst g |
| [η] | 2.15 dl/g |
| flowability index | 28 seconds |
| compacted bulk density | 0.28 $g/cm^3$ (g/cc) |

The polymerization conditions prevailing in the above examples were the following.

A proper amount of the catalytic component prepared according to the examples was charged, together with 1000 ml of anhydrous n-heptane, containing 5 mmol of aluminumtriisobutyl under a nitrogen atmosphere, into a stainless-steel autoclave having a 3-liter capacity, equipped with a magnetic-anchor stirrer and heated to the temperature of 85°C.

4 atom of hydrogen and 9 atm of ethylene were added and the total pressure was maintained constant throughout the polymerization operation by continuously feeding ethylene.

After three hours of reaction, the polymerization was discontinued, the polymer was filtered off and dried.

**Claims**

1. Emulsions in perfluoropolyether oil of compounds, liquid under emulsifying conditions, of magnesium and/or of a transition metal, or of solutions of compounds of Mg and/or of a transition metal in solvents not miscible with perfluoropolyether.

2. Process for the preparation of a solid catalytic component, of polymerization catalysts, or of precursors of such component suitable for use in the polymerization of ethylene or of mixtures thereof with minor amounts of alphaolefins, in the form of mcrospheroidal particles, which consists reacting

(a) an emulsion in a perfluoropolyether of compounds of magnesium, and/or of titanium or another transition metal, either liquid or in solution in a solvent not miscible with such a perfluoropolyether, optionally in the presence fo electrodonors, with

(b) a reducing and/or halogenating agent able to precipitate such a compound in the form of a solid product, the molecule of which contains at least one Mg-halogen bond and/or one transition metal-halogen bond in case where compounds of Mg and/or of a transition metal are present in the emulsion.

3. Process according to claim 1, wherein the magnesium compound is in the form of a solution in a liquid titanium compound.

4. Process according to claims 1 and 2, wherein Mg compound presents the general formula:

(I) $$Mg(OR_1)_{2-n}X_n$$

wherein:

$R_1$ = a $C_1$ to $C_{12}$ optionally halogenated hydrocarbon radical;

X is a halogen;

n = an integer comprised between 0 and 2.

5. Process according to claims 1 and 2, wherein Mg compound presents general formula:

(II) $$Mg(OR_1)_{m-n}(R_2)_n$$

wherein:

$R_1$ = a $C_1$ to $C_{12}$ optionally halogenated hydrocarbon radical;

$R_2$ = a $C_1$ to $C_{12}$ hydrocarbon radical equal to, or different from $R_1$;

m and n = integers comprised between 0 and 2.

6. Process according to claims 1 and 2, wherein Mg compound presents general formula:

(III) $$MgX_2.nTi(OR_1)_4$$

wherein:

X = a halogen;

$R_1$ = a $C_1$ to $C_{12}$ optionally halogenated hydrocarbon radical;

n = an integer greater than or equal to 2.

7. Process according to claims from 1 to 5, wherein the solvent of the magnesium compound is constituted by a liquid titanium compound of the general formula:

(IV) $Ti(OR_2)_{4-n}X_n$

wherein:
$R_1$ = a $C_1$ to $C_{12}$ optionally halogenated hydrocarbon radical;
X = a halogen;
n = an integer comprised between 0 and 3.

8. Process according to claim 6, wherein the Mg compound is a Mg halide.

9. Catalytic compounds and precursors of such components obtained by the process according to preceding claims.

**Patentansprüche**

1. Emulsionen in Perfluoropolyäther-Öl von unter Emulsionsbedingungen flüssigen Magnesium- bzw. Transistionsmetallverbindungen, oder von Lösungen von Magnesium- bzw. eines Transitionsmetallverbindungen in mit Perfluoropolyäther nicht mischbaren Lösungsmitteln.

2. Verfahren zur Herstellung eines katalytischen Festbestandteils für Polymerisationskatalysatoren oder von Ausgangsstoffen für einen solchen Bestandteil, verwendbar für die Polymerisation von Äthylen oder entsprechenden Gemischen mit geringem Gehalt an Alpha-Olefinen, in Form von mikrokugelförmigen Teilchen, das folgendem Verfahrensschritt entspricht:

(a) man lässt eine Emulsion von Magnesium- und/oder von Titanium- oder einer anderen Transitionsmetallverbindung in Perfluoropolyäther entweder in flüssigem Zustand oder in Lösungen in einem mit dem Perfluoropoläther nicht mischbaren Lösungsmittel, gegebenenfalls in Gegenwart von Elektrospendern, reagieren mit:

(b) einem Reduktions- und/oder Halogenisierungsmittel, das die Niederschlagung der Verbindung in Form eines Festproduktes erlaubt, das Verbindungsmolekül von welchem wenigstens eine Mg-Halogen- und/oder Transitionsmetall-Halogenbindung aufweist, wenn Verbindungen von Mg und/oder eines Transitionsmetalls in der Emulsion vorliegen.

3. Verfahren nach Anspruch 2, bei welchem die Magnesiumverbindung in Form einer Lösung in einer flüssigen titaniumhaltigen Verbindung vorliegt.

4. Verfahren nach den Ansprüchen 1 und 2, bei welchem die Mg-Verbindung der allgemeinen Formel

(I) $Mg(OR_1)_{2-n}X_n$

entspricht, in der:
$R_1$ = ein gegebenenfalls halogenhaltiges Kohlenwasserstoffradikal mit 1 bis 12 Kohlenstoffatomen;
X = ein Halogen;
n = eine ganze Zahl von 0 bis 2.

5. Verfahren nach den Ansprüchen 1 und 2, bei welchem die Mg-Verbindung der allgemeinen Formel

(II) $Mg(OR_1)_{m-n}(R_2)_n$

entspricht, in der
$R_1$ = ein gegebenenfalls halogenhaltiges Kohlenwasserstoffradikal mit 1 bis 12 Kohlenstoffatomen;
$R_2$ = ein Kohlenwasserstoffradikal mit 1 bis 12 Kohlenstoffatomen, dem Radikal $R_1$ gleich oder verschieden;
m und n = ganze Zahlen von 0 bis 2.

6. Verfahren nach den Ansprüchen 1 und 2, bei welchem die Mg-Verbindung der allgemeinen Formel

(III) $MgX_2.nTi(OR_1)_4$

entspricht, in der
X = ein Halogen;
$R_1$ = ein gegebenenfalls halogenhaltiges Kohlenwasserstoffradikal mit 1 bis 12 Kohlenstoffatomen;
n = eine ganze Zahl, gleich oder grösser als 2.

7. Verfahren nach den Ansprüchen 1 bis 5, bei welchem das Mg-Verbindungs-Lösungsmittel aus einer Titaniumverbindung besteht, die folgender allgemeiner Formel

(IV) $Ti(OR_2)_{4-n}X_n$

entspricht, in welcher

$R_2$ = ein gegebenenfalls halogenhaltiges Kohlenwasserstoffradikal mit 1 bis 12 Kohlenstoffatomen;

X = ein Halogen;

n = eine ganze Zahl von 0 bis 3.

8. Verfahren nach Anspruch 6, bei welchem die Mg-Verbindung eine Mg-Halogenverbindung ist.

9. Katalytische Verbindungen bzw. Ausgangssubstanzen für durch das Verfahren der vorstehenden Ansprüche hergestellte Verbindungen.

**Revendications**

1. Les émulsions dans une huile polyéther perfluoré de composés liquides sous conditions d'émulsification, de magnésium et/ou d'un métal de transition, ou de solutions de ces composés de magnésium et/ou d'un métal de transition dans un solvant non miscible avec le polyéther perfluoré.

2. Le procédé pour la préparation d'un composé catalytique solide, de catalyseurs de polymérisation ou de précurseurs de tels composés convenables pour l'utilisation dans la polymérisation de l'éthylène ou de mélanges de celui-ci avec de faibles quantités d'α-oléfines, sous forme de particules microsphéroïdales, ce procédé consistant à faire réagir

(a) une émulsion dans un polyéther perfluoré de composés de magnésium et/ou de titane, ou d'un autre métal de transition, soit liquide soit en solution dans un solvant non-miscible avec un tel polyéther perfluoré, éventuellement en présence d'électro-donneurs, avec

(b) un agent de réduction et/ou d'halogénation capable de précipiter un tel composé sous forme d'un produit solide, dont la molécule contient au moins une liaison magnésiumhalogène et/ou une liaison métal de transition-halogène, dans le cas où des composés de magnésium et/ou de métal de transition sont présents dans l'émulsion.

3. Un procédé selon la revendication 1, dans lequel le composé de magnésium est sous forme d'une solution dans un composé de titane liquide.

4. Un procédé selon les revendications 1 et 2, dans lequel le composé de magnésium présente la formule générale:

(I) $$Mg(OR_1)_{2-n}X_n$$

dans laquelle:

$R_1$ = un radical de $C_1$ à $C_{12}$ hydrocarbure éventuellement halogéné;

X = un halogène;

n un nombre entier compris entre 0 et 2.

5. Un procédé selon les revendications 1 et 2, dans lequel le composé de magnésium présente la formule générale:

(II) $$Mg(OR_1)_{m-n}(R_2)_n$$

dans laquelle:

$R_1$ = un radical de $C_1$ à $C_{12}$ hydrocarbure éventuellement halogéné;

$R_2$ un radical hydrocarbure de $C_1$ à $C_{12}$ hydrocarbure, identique ou différent de $R_1$;

m et n = des entiers compris entre 0 et 2.

6. Un procédé selon les revendications 1 et 2, dans lequel le composé de magnesium présente la formule générale:

(III) $$MgX_2 . nTi(OR_1)_4$$

dans laquelle:

X = un halogène;

$R_1$ = un radical de $C_1$ à $C_{12}$ hydrocarbure éventuellement halogéné;

n = un nombre entier supérieur ou égal à 2.

7. Un procédé selon les revendications 1 à 5, dans lequel le solvant du composé de magnésium est constitué par un composé de titane liquide de formule générale:

(IV) $$Ti(OR_2)_{4-n}X_n$$

dans laquelle:

$R_1$ = un radical de $C_1$ à $C_{12}$ hydrocarbure éventuellement halogéné;

X = un halogène;

n = un nombre entier compris entre 0 et 3.

8. Un procédé selon la revendication 6, dans lequel le composé de magnésium est un halogénure de magnésium.

9. Les composés catalytiques et les précurseurs de tels composés obtenus par les procédés correspondant aux précédentes revendications.